(19) **Europäisches Patentamt**
**European Patent Office**
**Office européen des brevets**

(11) **EP 1 755 300 B1**

(12) **EUROPEAN PATENT SPECIFICATION**

(45) Date of publication and mention
of the grant of the patent:
**15.06.2011   Bulletin 2011/24**

(51) Int Cl.:
***H04L 27/26*** (2006.01)

(21) Application number: **06077076.5**

(22) Date of filing: **04.07.2003**

(54) **Synchronisation in multicarrier receivers**

Synchronisierung in Mehrträgerempfängern

Synchronisation dans des récepteurs multiporteuses

(84) Designated Contracting States:
**BE DE FR IT**

(30) Priority: **05.07.2002   GB 0215639**

(43) Date of publication of application:
**21.02.2007   Bulletin 2007/08**

(62) Document number(s) of the earlier application(s) in
accordance with Art. 76 EPC:
**03254264.9 / 1 387 544**

(73) Proprietor: **British Broadcasting Corporation
London W1A 1AA (GB)**

(72) Inventors:
• **Elliott, John E.,
c/o British Broadcasting Corp.
Tadworth,
Surrey KT20 6NP (GB)**

• **Stott, Jonathan H.,
c/o British Broadcasting Corp.
Tadworth,
Surrey KT20 6NP (GB)**
• **Haffenden, Olivier P.,c/o British Broad. Corp.
Tadworth,
Surrey KT20 6NP (GB)**

(74) Representative: **Reeve, Nicholas Edward et al
16 Theobalds Road
London WC1X 8PL (GB)**

(56) References cited:
**EP-A- 0 836 304      EP-A- 0 903 897
EP-A- 1 206 096      EP-A- 1 283 614
WO-A1-97/26742      US-A- 5 848 107**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

This invention relates to receivers for Orthogonal Frequency Division Multiplex (OFDM) signals.

The use of OFDM has been proposed for a number of systems including the DVB-T (Digital Video Broadcasting - Terrestrial), DAB (Digital Audio Broadcasting) also known as DSB (Digital Sound Broadcasting), and DRM (Digital Radio Mondiale) systems. A DVB-T receiver is described in our European Patent Application 02250062.3, publication EP-A-1221793, and the DVB-T system is defined in European Telecommunications Standard ETS 300 744. The DRM system is described in ETSI Technical Specification TS 101 980 V1.1.1 (2001-9) available from ETSI, 650 Ronte des Lucioles, F-06921 Sophia Antipolis, France (the DRM standard). A briefer description of the DRM system is given in EBU Technical Review, March 2001, DRM-Key technical features, Jonathan Stott.

Both DVB-T and DRM use coded OFDM (COFDM), which is a many-carrier system in which interference is spread over many carriers by the use of a time domain/frequency domain transformation which is effected e.g. by a fast Fourier transform (FFT) circuit. In the OFDM system, instead of transmitting the digital binary bits sequentially on a single carrier, they are assembled and transmitted simultaneously on a large number of closely-spaced carriers, in the hundreds or thousands. In this way each bit can be transmitted for much longer by a factor of hundreds or thousands. The bits are transmitted in parallel on the many carriers in a succession of symbol periods, each symbol period transmitting one bit or a plurality of bits on each carrier.

The duration of each symbol, the symbol period $T_s$, is made up of an active or useful symbol period $T_u$ and a guard interval $T_g$. The spacing between adjacent carriers is the reciprocal of the active symbol period, thus satisfying the condition for orthogonality between the carriers. The guard interval is a predefined fraction of the active symbol period, and contains a cyclic continuation of the active symbol.

Time synchronisation of the receiver with the received signal is essential for proper decoding of COFDM. DRM uses COFDM in the AM bands (i.e. below 30MHz) which brings new challenges for time synchronisation. It is known that the channels likely to be encountered in the AM bands may have many paths and large delay spreads as well as Doppler shifts and spreads. Any time synchronisation method used for DRM must be able to deal with these types of channel and, moreover, should try to ensure that as much of the energy in the channel as possible is placed within the allowed timing window to minimise inter-symbol interference (ISI).

In OFDM, at baseband the first carrier each side of the DC carrier comprises one complete cycle. The next carrier comprises two cycles and so on. It is this relationship that ensures there is no inter-carrier interference (ICI); that is it defines the orthogonality condition of OFDM. It is important that the sample rate at the transmitter and receiver are the same, otherwise the duration of one cycle of a carrier will be different between the receiver and transmitter, breaking the orthogonality of the signal. A demodulator must also ensure that it captures all of the useful part of the symbol to satisfy the OFDM criterion. If it captures too much it will include some of either the previous symbol or the next symbol, and inter-symbol interference (ISI) will result.

The OFDM parameters for DRM are summarised in Table 1.

Table 1 : Summary of the OFDM parameters in DRM

| Robustness mode | Duration $T_u$ | Carrier spacing $1/T_u$ | Duration of guard interval $T_g$ | Duration of symbol $T_s = T_u + T_g$ | FFT size | $T_g/T_u$ |
|---|---|---|---|---|---|---|
| A | 24ms | $41^2/_3$ Hz | 2.66ms | 26.66ms | 288 | 1/9 |
| B | 21.33ms | $467^7/_8$ HZ | 5.33ms | 26.66ms | 256 | 1/4 |
| C | 14.66ms | $68^2/_{11}$ Hz | 5.33ms | 20.00ms | 176 | 4/11 |
| D | 9.33ms | $107^1/_7$ Hz | 7.33ms | 16.66ms | 112 | 11/14 |

Time synchronisation is thus essential in any digital receiver. The synchronisation can be considered as being in two parts:

(i) Synchronisation of the receiver clock (i.e. the sampling frequency) with the received signal (i.e. the transmitter clock).

(ii) Synchronisation of the timing window of the receiver to the symbol boundaries (i.e. phase).

Thus the receiver needs to be able to measure the error in (i) the sampling frequency and (ii) the symbol position, and to have some means of correcting any such error.

In OFDM, the guard interval allows the system to tolerate multipath interference effects. The addition of the guard interval, of duration $T_g$, to the OFDM symbol means there is a tolerance equal to the duration of the guard interval in the window position for a single path. If there is multipath interference, the total delay spread can be as much as a guard interval without causing ISI, assuming that the entire channel is placed within this window. Even if there is energy outside the guard interval, so long as it is at a low level the error correction coding in the decoder should deal with this.

The time synchronisation systems used with DAB and DVB-T may not be optimal for the channels encountered below 30MHz used by DRM. These channels are likely to be very different, with a much larger delay spread and Doppler shifts, and generally to be more dynamic (rapidly varying). Therefore the receiver may have a harder job both in acquiring time synchronisation and in maintaining it. As the decoder will have a hard enough job anyway it is important to reduce as much as possible both inter-symbol interference (ISI) and inter-carrier interference (ICI). It is also desirable for the receiver to lock to the incoming stream as quickly as possible.

United States Patent 5,848,107 describes an OFDM receiver which determines the impulse response of the transmission medium and adapts the FFT window accordingly. The impulse response can be compressed, and certain (unspecified) parts of the impulse response can be emphasized or de-emphasized. The receiver provides time synchronisation detection by generating an estimated channel impulse response and combining it with a weighting function and adapts the FFT window so that the central position "moves towards" the desired position.

SUMMARY OF THE INVENTION

The invention in its various aspects is defined in the independent claims below, to which reference should now be made. Advantageous features are set forth in the appendant claims.

A preferred embodiment of the invention is described in more detail below with reference to the drawings. Briefly, the preferred embodiment takes the form of a receiver which has a pre-FFT time synchronisation algorithm, which is used to synchronise the receiver to the incoming symbols to a reasonable level of accuracy, before handing over to a post-FFT time synchronisation algorithm. The pre-FFT algorithm generates a number of waveforms which are used to detect the presence and location of the guard interval. The data before the FFT can be used to obtain relatively crude time and frequency synchronisation, and then decision logic is used to switch to using the post-FFT algorithms.

The post-FFT synchroniser generates an estimated channel impulse response, squares the estimated channel impulse response to provide an estimated power impulse response, combines the estimated power impulse response with a weighting function to generate a signal which is a measure of the damage done to the signal response as a function of window position, side portions of the weighting function being substantially of quadratic form, and detects when the resultant waveform is below a predetermined threshold, to provide a synchronisation signal.

BRIEF DESCRIPTION OF THE DRAWINGS

The invention will now be described in more detail, by way of example, with reference to the drawings, in which:

**Figure 1** is a block diagram of the pertinent part of a DRM receiver;
**Figure 2** is a more detailed block diagram showing the pre-FFT and post-FFT synchronisers in more detail;
**Figure 3** is a diagram illustrating the decrease in useful voltage for paths outside the guard interval;
**Figure 4** is a diagram illustrating the wanted and unwanted power for paths outside the guard interval;
**Figure 5** is a diagram illustrating a method of determining the width of the minimum region;
**Figure 6** illustrates the 'damage' waveform for a 0dB echo with a delay of a guard interval; and
**Figure 7** illustrates the 'damage' waveform for a 0dB echo with a delay greater than a guard interval.

DETAILED DESCRIPTION OF THE PREFERRED EMBODIMENT

An embodiment of the invention will now be described with reference to the drawings.

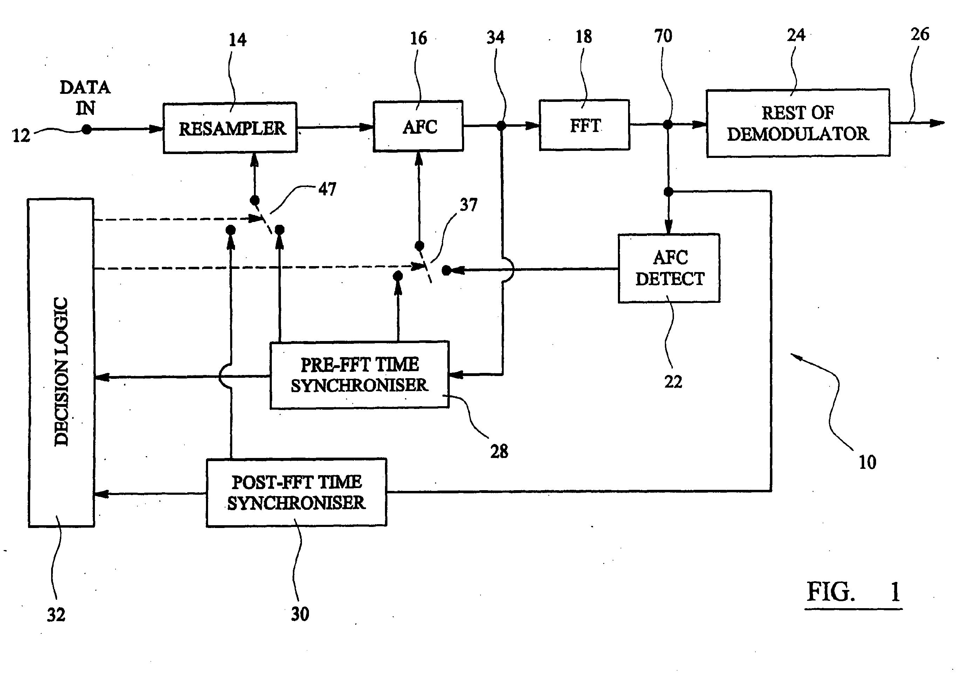

Figure 1 is a schematic block diagram of the relevant part of a DRM receiver embodying the invention. The circuit 10 of Figure 1 has a data input 12 which receives the received DRM signal after it has been demodulated to baseband. This signal is applied to a resampler 14 which samples the signal at a controlled rate and timing. The output of the resampler is applied to an AFC circuit (automatic frequency corrector) 16 which corrects for minor frequency errors, and thence the signal is applied to a fast Fourier transform (FFT) circuit 18, which operates to decode the OFDM coded signal. The output of the FFT circuit is applied to an AFC detect circuit 22 which detects any frequency error in the decoded signal and which in turn supplies a control input to the AFC circuit 16. The AFC circuit 16 is a standard complex multiplier and the detect circuit 22 is based on a differential demodulator. Finally the output of the FFT 18 is also applied to the rest of the demodulator, indicated by reference 24 on Figure 1, and which provides an output 26. For further details of the DRM receiver, reference should be made to the DRM standard as referred to above.

The circuit as shown in Figure 1 employs a resampler 14. An alternative to this would be to use a voltage controlled crystal oscillator (VCXO) to lock the receiver to the incoming data stream. If a resampler is used, then the basic sampling frequency of the DRM specification is 12kHz when a spectral occupancy of 10kHz is used, or 24kHz for a spectral occupancy of 20kHz. Therefore the DRM receiver can run at a 50kHz sampling frequency, and the resampling circuit applies a nominal 2 to 1 down-sampling factor, to give samples at 25kHz. This down-sampling factor is controllable, within limits, so that a down-sampling factor of more than 2 to 1 is possible. In this way the required 24ks/s (kilo-samples per second) sample rate can be achieved. The time synchronisation algorithm must then provide the correct control signal to the resampling circuit to ultimately achieve symbol synchronisation.

The circuit of Figure 1 additionally includes a pre-FFT synchroniser 28 and a post-FFT synchroniser 30. The pre-FFT synchroniser receives as an input the output 34 of the AFC circuit 16 and provides an output to decision logic 32. The post-FFT synchroniser 30 receives as an input the output 70 of the FFT circuit 18 and also provides an output to decision logic 32. The decision logic 32 provides control signals to switches represented on Figure 1 as switches 37 and 47. Switch 37 selects either the output of the pre-FFT synchroniser 28 or the output of the find frequency error circuit 22 for use as a timing control signal to the frequency corrector 16. Switch 47 selects either the output of the pre-FFT synchroniser 28 or the output of the post-FFT synchroniser 30 for use as a timing control signal to the resampler 14.

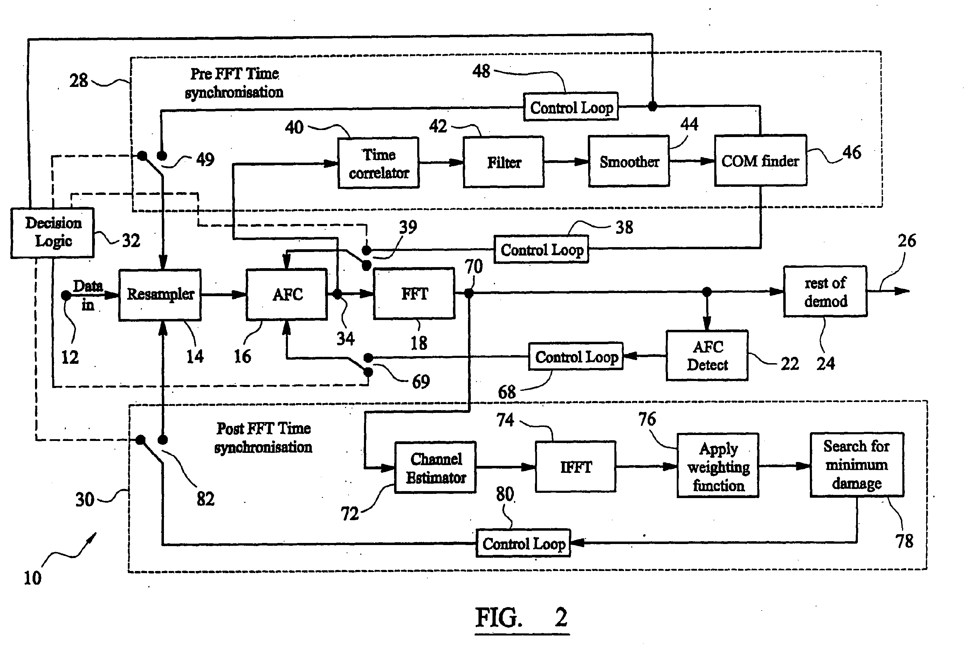

The structure of the pre-FFT synchroniser 28 and the post-FFT synchroniser 30 is shown in more detail in Figure 2. The pre-FFT synchroniser 28 has an input which is connected to the output 34 of the AFC circuit 16. The pre-FFT synchroniser 28 then comprises a timing correlator 40, a filter 42, a smoother 44, and a centre-of-mass (COM) finder circuit 46 connected in series. A DC restorer circuit may optionally be included between the smoother 44 and the COM finder circuit 46. The output of the COM finder 46 is connected as a control input to the decision logic 32. The output of the COM finder 46 is also applied though a control loop 48 and a switch 49 to control the timing of the resampler 14. That is, switch 49 forms one half of switch 47 shown on Figure 1. Finally the output of the COM finder 46 is also applied though a control loop 38 and a switch 39 to control the timing of the frequency corrector 16. That is, switch 39 forms one half of switch 37 shown on Figure 1. The control loop 38 may comprise a circuit which finds the phase angle of the signal from its real and imaginary components to provide a degree of phase correction. An output from the find frequency error circuit 22 is also applied though a control loop 68 and a switch 69 to control the timing of the frequency corrector 16. That is, switch 69 forms the other half of switch 37 shown on Figure 1.

If desired, filters can be included at the output of the AFC circuit 16 in the main signal path and/or at the input to the pre-FFT synchronizer 28. For example, a channel filter and/or a DC filter can be included in the signal path, and a notch filter included at the input to the mode detector to remove interfering signals.

The post-FFT synchroniser 30 has an input which is connected to the output 70 of the FFT circuit 18. The post-FFT synchroniser then comprises a channel estimator circuit 72, an inverse fast Fourier transform circuit (IFFT) 74, a circuit 76 for applying a weighting function, and a circuit 78 for searching for minimum damage, connected in series. The function of these circuits is described in more detail below. The output of the minimum damage search circuit 78 is applied though a control loop 80 and a switch 82 to control the timing of the resampler 14. That is, switch 82 forms the other half of switch 47 shown on Figure 1.

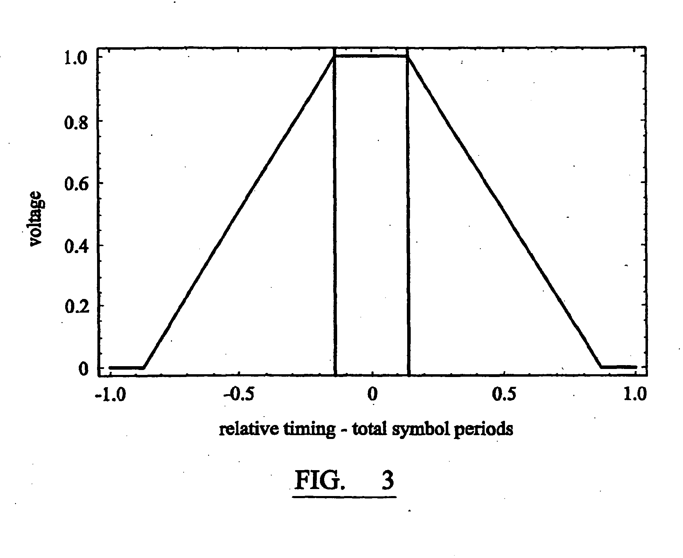

The operation of the pre-FFT synchroniser is described in European Patent 1,387,544 B1 in particular with reference to Figures 3 to 7 thereof.

In summary, in the time correlator 40 the incoming symbol is first correlated with itself (by taking the conjugate product) across a delay of the useful symbol length. Some filtering is applied to this using the recursive IIR filter 42. This is then smoothed in smoother 44 with a 'top hat' response, with a width equal to the guard interval. From this the peak is now found, the location of which occurs at the end of the guard interval. This position is fed into the loop filter 48 so that eventually a complete symbol is in an input buffer which controls the resampler 14 so that samples from a single symbol are applied to the FFT 18. The loop filter 48 has a bandwidth which limits how fast the timing position can move.

At the beginning of the acquisition of synchronisation, the window position could be incorrect by half a symbol period, which would take too long to move to the correct position. To speed this process up, the receiver can make a "jump" to the correct position by throwing away some samples. A confidence counter is used to ensure the peak appears in a consistent position before making the jump. The phase angle error can also be determined from this waveform.

However, this technique has a problem with a noisy waveform, with a 0dB or zero decibel echo (interference of equal magnitude to the desired signal), or with a changing channel. In the absence of noise, this waveform would have a "flat top". With noise the exact peak can move by a large amount from symbol to symbol. Similarly for a noisy waveform or changing channel the position of the peak will be different from symbol to symbol.

A time synchronisation method is therefore required that overcomes these problems just noted above. Also the pre-FFT time synchroniser 28 and post-FFT time synchroniser 30 should preferably work in a similar way, so that hand over from one to the other can occur smoothly. In principle, the pre-FFT time synchroniser 28 only needs to get to within a certain position of the ideal, as the post-FFT time synchroniser 30 will be able to determine the ideal position more accurately. However, as described below, the post-FFT time synchronisation uses the output from the channel estimator 72, which is band limited. Therefore it is not possible for it to move the timing window quickly, otherwise the output from the channel estimator is upset. So to ensure a quick lock-up it is preferable that the pre-FFT time synchroniser gets as close as possible to the ideal position, and the post-FFT time synchroniser then fine tunes the position and tracks the changing channel thereafter. Thus the two synchronisers 28 and 30 co-operate in this way to provide improved timing synchronisation for the receiver.

The method employed in the preferred embodiment described and illustrated takes into account the delay spread of the channel and attempts to place all or at least the largest part of the channel energy into the window. A "centre of mass" technique is applied to the output of the smoother 44 by the COM finder circuit 46. The smoother waveform contains information about the delay spread and the energy distribution of the channel, and thus the method can take into account the delay spread of the channel.

The "centre of mass" is a form of weighted average and is described in the above-mentioned European Patent.

The post-FFT time synchroniser 30 will now be described. As the signal is less noise-like after it has been through the FFT 18, any algorithm working on this data should give cleaner results.

The demodulator has to calculate an estimated channel frequency response (channel estimate) so that it is able to correct the effects of the channel on the individual carriers. The channel estimator uses the pilot carriers (sometimes referred to as gain references) which are placed in the signal for this purpose. The channel estimation shows which carriers have been attenuated or boosted because of the effects of the channel.

The post-FFT time synchroniser uses the output of this channel estimator, shown in Figure 2 at 72, which is in the frequency domain. An FFT operation, or to be strictly accurate an inverse FFT (IFFT) operation, is performed on these data to give an estimated channel impulse response in the time domain. The magnitude of the output of the IFFT is then squared (in the circuit 74) to give an estimate of the power impulse response (PIR). This gives a useful representation of the behaviour of the channel in the time domain.

It is also used to calculate where best to place the timing window. This requires the extra processing overhead of the FFT 74 and any other processing that is required, but the optimum placing of the timing window is important to get the best performance out of the receiver.

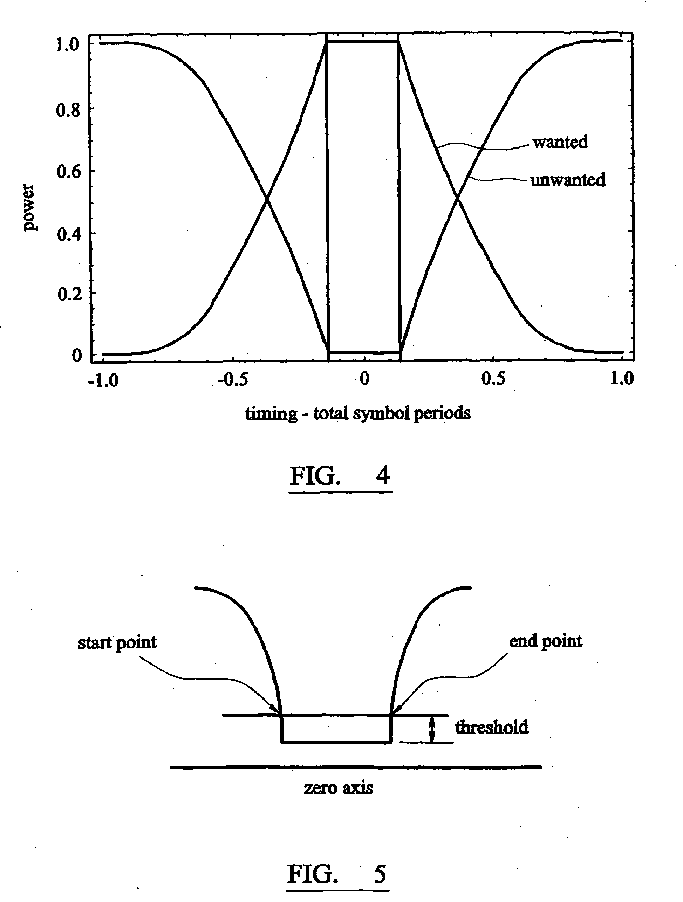

The preferred post-FFT time synchroniser system illustrated in Figure 2 will now be described. By way of background, it will be appreciated that all paths falling within the guard-interval wide window contribute only useful power. We have appreciated that paths falling outside the guard-interval wide window contribute both useful and unwanted power; these paths represent ISI. That is, these paths contribute positively as well as destructively. The paths contribute a substantially linear decrease in wanted voltage as they move outside the guard interval as shown in the diagram of Figure 3. This gives a quadratic decrease in useful power as shown in Figure 4, and also gives a quadratic increase in unwanted power. We have appreciated that this can be used as a weighting function along with the PIR so as to calculate what damage will be done when the PIR is placed at each possible position. What is more, using such a quadratic function make the optimum use of the paths falling outside the window.

This is achieved simply by multiplying the weighting function and PIR together at each possible window position. This gives a new waveform which shows the damage done against timing position. The minimum in this waveform is then located and the timing window placed at that position.

The form of the quadratic function illustrated in Figure 4 will now be described. If $\tau$ denotes the timing of a received path with respect to the centre of the $T_g$-wide window within which perfect reception is obtained, then the proportions of the power of this path which contribute usefully or harmfully respectively may be determined by applying the following power-weighting functions. The wanted-component power-weighting function $W(\tau)$ is given as:

$$W(\tau) = 1, \quad \text{for } |\tau| \leq \frac{T_g}{2}$$

$$W(\tau) = 0, \quad \text{for } |\tau| \geq T_u + \frac{T_g}{2}$$

$$W(\tau) = \left( \frac{T_u + \frac{T_g}{2} - |\tau|}{T_u} \right)^2,$$

otherwise.

The unwanted-component ('damage') power-weighting function $U(\tau)$ is given as:

$$U(\tau) = 0, \quad \text{for } |\tau| \leq \frac{T_g}{2}$$

$$U(\tau) = 1, \quad \text{for } |\tau| \geq T_u + \frac{T_g}{2}$$

$$U(\tau) = \left( 1 - \left( \frac{T_u + \frac{T_g}{2} - |\tau|}{T_u} \right)^2 \right),$$

otherwise.

It will be seen that the side portions (of width $T_u$) of the weighting function are thus of quadratic form, i.e. dependent on $\tau^2$, and the weighting functions are complementary, i.e. $W(\tau) + U(\tau) = 1$. This maximises the ratio of the total wanted-signal components to the total unwanted-signal components. It can be shown that this is achieved by minimising the total unwanted-signal component, i.e. minimising the 'damage done'.

Some departure from the precise formula is possible but the function used should retain the general form of a quadratic function.

The manner in which this is implemented in the preferred embodiment is as follows. A channel estimate is provided by the channel estimator circuit 72. This is first upsampled by a factor of two, and the time-interpolated pilots are packed next to each other in the array. For the DRM mode B this gives an upsampling factor of 1 to 4. An FFT is then performed on this data by the IFFT circuit 74, to give the estimated CIR, and the square of the magnitude is taken to give the PIR. This is then multiplied by the weighting function (based on Figure 4) in the weighting function circuit 76 at each possible window position, to give an array that contains a value indicating the 'damage done' in each possible window position. This may be considered expensive in terms of processing but, because of the simple form of the weighting function, this can be achieved with simple integrators. The output is also normalised by the total "mass" of the PIR to give values between zero and unity.

The power of paths that are outside of the guard interval are underestimated so the PIR is preferably additionally corrected to allow for this. This can be achieved by dividing the PIR by the wanted power curve of Figure 4, before using the PIR to calculate the damage waveform.

If there was a single path in the transmission channel a waveform would be obtained that looked like the unwanted power curve of Figure 4. There is a window of width equal to that of the guard interval where the function is zero, and no damage is done, as expected. The best location to place the timing window is with half a guard interval before and half a guard interval after, to allow for either later or earlier paths appearing. It is necessary, therefore, to find the centre point of the minimum region of this function. The whole of the minimum region should, in principle, be exactly equal to zero but because of noise and rounding errors in the calculation this will not be the case. Thus a threshold value should be chosen that is based on the minimum value of the array. This is achieved by the 'search for minimum damage' circuit 78 in Figure 2 and is illustrated in Figure 5.

As seen in Figure 5, the starting point for the minimum region is the first sample that is below the threshold, and the end point is the last sample in the array below the threshold. These values are then averaged to give the centre point of the minimum region.

Due to the upsample factor and the averaging of the start and end points, the position given by this algorithm has a resolution of 1/8 sample.

In summary, the post-FFT synchroniser seeks to determine the best window position by following these steps:

1. Do an FFT on the received pilot carriers in the DRM signal, which act as gain references, to give an estimated channel impulse response (CIR).
2. Take the magnitude of the CIR and square it to give an estimated power CIR (PIR).
3. Use the quadratic-form weighting function and the PIR to generate a waveform showing the damage done as a function of window position.
4. Find the minimum in this waveform and use this position as the input to the loop filter.

The bandwidth of the DRM signal (usually 10kHz) is much less than that for DVB-T (8MHz) which means the overall processing and storage requirements required are much less. This means that carrying out extra processing on the data to improve the time and frequency synchronisation after carrying out the FFT is a practical possibility for DRM.

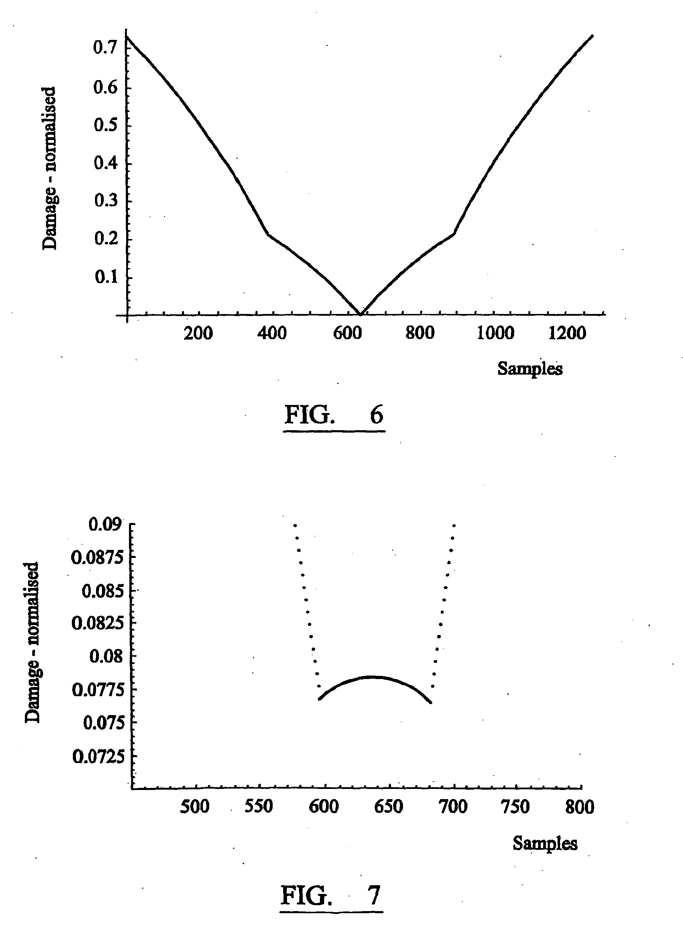

Some simple examples will now be considered. First, for a 0dB echo of less than a guard interval delay, the minimum region will be reduced in width. If the delay is now increased to exactly a guard interval, the waveform now reaches zero at just one point. This is shown in Figure 6. If the delay is then increased further, so that the delay is a little greater than a guard interval, the damage waveform now looks as indicated in Figure 7, where there are two minima and the waveform no longer reaches zero. It is still possible to apply a minimum search and find the width, which now is small for a well-chosen threshold value. In this situation the algorithm will place one path just inside the guard interval and the other just outside the guard interval, which is exactly the behaviour desired to cause the minimum damage. For two equal paths it is arbitrary which one is placed inside the guard interval. For two unequal paths the algorithm will place the bigger path in the guard interval.

An improvement to the post-FFT system will now be described. This involves tracking the history of the channel impulse response. In a situation where the channel conditions are changing, the timing control can be refined further. For example, considering the case of a 0dB echo located a guard interval from the main path, the timing control will place the two paths on each edge of the timing window. If the echo now fades, the control begins to move the first path towards the centre of the window. If the second path now re-appears it will be outside the timing window and will cause ISI. It depends how rapidly the path reappears as to how much damage it will cause. If it reappears slowly enough (i.e. slower than the bandwidth of the control loop) the ISI caused may not be too great. Therefore an improved algorithm would track paths as they come and go, and make decisions as to whether it should move the timing window or not based on the history of the paths. So for the simple example above, if the second path disappears and then reappears with regularity, the algorithm would not move the window.

The signal through the FFT 18 should preferably be corrected for any frequency error that may be present so that the imaginary part of the signal corresponding to the location of the guard interval is zero. Despite the AFC loop comprising circuits 22 and 16 in Figure 1 there may still be a residual frequency error. Thus, more processing is desirable to take the magnitude of the smoothed waveform before searching for the peak.

The preferred embodiment described with reference to Figure 2 and the other figures has been found to operate effectively, placing the timing window in a position where ISI was insufficient to cause errors in the audio stream. The path just outside the guard interval window was sufficiently down on the total energy within the window such that any ISI was correctable by the multi-level DRM decoder. It is unlikely that a pre-FFT time synchronisation technique alone would be able to cope as well.

The system described avoids the need to set thresholds in the algorithms, and uses a more deterministic approach.

The techniques described are not only applicable to DRM. The post-FFT synchronisation technique is applicable to any OFDM system where it is possible to obtain a channel impulse response.

Many modifications may be made to the system described above by way of example, within the scope of the appended claims. In particular, the various circuit elements shown as discrete components may be combined and may in part or in whole be implemented in software. In that event the system block diagrams should be regarded as being in the nature of flowcharts.

**Claims**

1. A method of receiving a many-carrier signal, the received many-carrier signal being of a type comprising a succession of symbol periods during each of which one bit or a plurality of bits is transmitted on each of a plurality of carriers, each symbol period comprising an active symbol period and a guard interval, the method comprising the steps of:

receiving a many-carrier signal of the said type;

subjecting the received signal to a transformation from time domain to frequency domain;

applying a time synchronisation detection to the received signal after the transformation; and

controlling the timing of the signals subjected to the transformation in dependence upon the time synchronisation detection;

wherein the time synchronisation detection comprises generating an estimated power impulse response and combining it with a weighting function:

**characterised in that** each side portion of the weighting function is substantially of quadratic form, the estimated power impulse response is combined with a weighting function by multiplying the estimated power impulse response and the weighting function at each possible window position to generate a signal which is a measure of the damage done to the signal response as a function of window position, and by detecting when the signal is below a predetermined threshold.

2. A method according to claim 1, in which the locating step comprises:

detecting the first and last points at which the signal is below the threshold; and

determining the average of the said first and last points as the centre of a window position.

3. A method according to claim 1 or 2, in which the estimated power impulse response is derived from pilot carriers in the received signal.

4. A method according to claim 1, 2 or 3, further comprising the step of multiplying the estimated power channel impulse response by a function representing the unwanted power in the signal.

5. A method according to claim 4, further comprising the step of dividing the estimated power channel impulse response by a function representing the wanted power in the signal.

6. A method according to claim 5, in which the locating step includes taking account of the history of the result of previous locating steps.

7. A method according to any of claims 1 to 6, in which the received signal is an orthogonal frequency division multiplex, OFDM, signal.

8. A method according to claim 7, in which the received signal is a Digital Radio Mondiale, DRM, signal.

9. Apparatus for receiving a many-carrier signal, the received many-carrier signal being of a type comprising a succession of symbol periods during each of which one bit or a plurality of bits is transmitted on each of a plurality of carriers, each symbol period comprising an active symbol period and a guard interval, the apparatus comprising:

an input (12) for receiving a many-carrier signal of the said type;

transformation means (18) for subjecting the received signal to a transformation from time domain to frequency domain;

a detector (30) for time synchronisation detection applied to the received signal after the transformation; and

a controller (32) for controlling the timing of the signals subjected to the transformation in dependence upon the time synchronisation detection;

wherein the detector (30) for time synchronisation detection comprises a generator (72,74) for generating an estimated power impulse response, PIR, and a combiner (76) for combining the estimated power impulse response with a weighting function;

**characterised in that** each side portion of the weighting function is substantially of quadratic form, the combiner (76) for combining the estimated power channel impulse response with a weighting function multiplies the estimated power impulse response and the weighting function at each possible window position to generate a signal which is a measure of the damage done to the signal response as a function of window position, and the detector (30) for time synchronisation detection further comprises means for detecting when the signal is below a predetermined threshold.

**10.** Apparatus according to claim 9, in which the locating means comprises:

means for detecting the first and last points at which the signal is below the threshold; and
means for determining the average of the said first and last points as the centre of a window position.

**Patentansprüche**

**1.** Verfahren zum Empfangen eines Vielträgersignals, wobei das empfangene Vielträgersignal von einem Typ ist, der eine Folge von Symbolperioden umfasst, während der jeweils ein oder mehrere Bits auf jedem von mehreren Trägern übertragen wird, wobei jede Symbolperiode eine aktive Symbolperiode und ein Schutzintervall aufweist, wobei das Verfahren die folgenden Schritte beinhaltet:

Empfangen eines Vielträgersignals des genannten Typs;
Unterziehen des empfangenen Signals einer Transformation von der Zeitdomäne in die Frequenzdomäne;
Anwenden einer Zeitsynchronisationserkennung auf das empfangene Signal nach der Transformation; und
Steuern des Timing der zu transformierenden Signale in Abhängigkeit von der Zeitsynchronisationserkennung;
wobei die Zeitsynchronisationserkennung das Erzeugen einer geschätzten Leistungsimpulsantwort und das Kombinieren derselben mit einer Gewichtungsfunktion beinhaltet;
**dadurch gekennzeichnet, dass** jeder Seitenabschnitt der Gewichtungsfunktion im Wesentlichen eine quadratische Form hat, die geschätzte Leistungsimpulsantwort kombiniert wird durch Multiplizieren der geschätzten Leistungsimpulsantwort und der Gewichtungfunktion an jeder möglichen Fensterposition mit einer Gewichtungsfunktion, um ein Signal zu erzeugen, das ein Maß für den Schaden an der Signalantwort in Abhängigkeit von der Fensterposition ist, und durch Erkennen, wenn das Signal unter einem vorbestimmten Schwellenwert liegt.

**2.** Verfahren nach Anspruch 1, bei dem der Ortungsschritt Folgendes beinhaltet:

Erkennen des ersten und des letzten Punktes, an denen das Signal unter dem Schwellenwert liegt; und
Ermitteln des Durchschnitts des genannten ersten und letzten Punkts als die Mitte einer Fensterposition.

**3.** Verfahren nach Anspruch 1 oder 2, bei dem die geschätzte Leistungsimpulsantwort von Pilotträgern in dem empfangenen Signal abgeleitet ist.

**4.** Verfahren nach Anspruch 1, 2 oder 3, das ferner den Schritt des Multiplizierens der geschätzten Leistungskanal-Impulsantwort durch eine die unerwünschte Leistung in dem Signal repräsentierende Funktion beinhaltet.

**5.** Verfahren nach Anspruch 4, das ferner den Schritt des Dividierens der geschätzten Leistungskanal-Impulsantwort durch eine die erwünschte Leistung in dem Signal repräsentierende Funktion beinhaltet.

**6.** Verfahren nach Anspruch 5, wobei der Ortungsschritt das Berücksichtigen der Historie des Ergebnisses von vorherigen Ortungsschritten beinhaltet.

**7.** Verfahren nach einem der Ansprüche 1 bis 6, bei dem das empfangene Signal ein OFDM-(Orthogonal Frequency Division Multiplex)-Signal ist.

**8.** Verfahren nach Anspruch 10, bei dem das empfangene Signal ein DRM-(Digital Radio Mondiale)-Signal ist.

**9.** Vorrichtung zum Empfangen eines Vielträgersignals, wobei das empfangene Vielträgersignal von einem Typ ist, der eine Folge von Symbolperioden umfasst, während der jeweils ein oder mehrere Bits auf jedem von mehreren Trägern übertragen wird/werden, wobei jede Symbolperiode eine aktive Symbolperiode und ein Schutzintervall umfasst, wobei die Vorrichtung Folgendes umfasst:

einen Eingang (12) zum Empfangen eines Vielträgersignals des genannten Typs;
ein Transformationsmittel (18), um das empfangene Signal einer Transformation von der Zeitdomäne in die Frequenzdomäne zu unterziehen;
einen Detektor (30) zur Zeitsynchronisationserkennung, die nach der Transformation auf das empfangene Signal angewandt wird; und

eine Steuerung (32) zum Steuern des Timing der zu transformierenden Signale in Abhängigkeit von der Zeitsynchronisationserkennung;

wobei der Detektor (30) zur Zeitsynchronisationserkennung einen Generator (72, 74) zum Erzeugen einer geschätzten Leistungsimpulsantwort (PIR) und einen Combiner (76) zum Kombinieren der geschätzten Leistungsimpulsantwort mit einer Gewichtungsfunktion umfasst; **dadurch gekennzeichnet, dass** jeder Seitenabschnitt der Gewichtungsfunktion im Wesentlichen eine quadratische Form hat, der Combiner (76) zum Kombinieren der geschätzten Leistungskanal-Impulsantwort mit einer Gewichtungsfunktion die geschätzte Leistungskanal-Impulsantwort und die Gewichtungsfunktion an jeder möglichen Fensterposition multipliziert, um ein Signal zu erzeugen, das ein Maß für den Schaden an der Signalantwort in Abhängigkeit von der Fensterposition ist, und der Detektor (30) zur Zeitsynchronisationserkennung ferner Mittel zum Erkennen umfasst, wenn das Signal unter einem vorbestimmten Schwellenwert liegt.

10. Vorrichtung nach Anspruch 9, bei der das Ortungsmittel Folgendes umfasst:

Mittel zum Erkennen des ersten und des letzten Punkts, an denen das Signal unter dem Schwellenwert liegt; und
Mittel zum Ermitteln des Durchschnitts des genannten ersten und letzten Punkts als die Mitte einer Fensterposition.

**Revendications**

1. Procédé de réception d'un signal multiporteuses, le signal multiporteuses reçu étant d'un type comprenant une succession de périodes symboles durant chacune desquelles un bit ou une pluralité de bits est transmis sur chacune d'une pluralité de porteuses, chaque période symbole comprenant une période symbole active et un intervalle de garde, le procédé comprenant les étapes consistant à :

recevoir un signal multiporteuses dudit type;
soumettre le signal reçu à une transformation du domaine temps en domaine fréquence;
appliquer une détection de synchronisation temporelle au signal reçu après la transformation; et
contrôler la base de temps des signaux soumis à la transformation en fonction de la détection de la synchronisation temporelle;
où la détection de la synchronisation temporelle comprend générer une réponse impulsionnelle de puissance estimée et la combiner avec une fonction de pondération;
**caractérisé en ce que** chaque portion latérale de la fonction de pondération est sensiblement de forme quadratique, la réponse impulsionnelle de puissance estimée est combinée avec une fonction de pondération en multipliant la réponse impulsionnelle de puissance estimée et la fonction de pondération à chaque position de fenêtre possible pour générer un signal qui est une mesure du dommage fait à la réponse du signal en fonction de la position de fenêtre et en détectant quand le signal est en dessous d'un seuil prédéterminé.

2. Procédé selon la revendication 1, dans lequel l'étape de localisation comprend :

détecter les premier et dernier points auxquels le signal est en dessous du seuil; et
déterminer la moyenne desdits premier et dernier points comme le centre d'une position de fenêtre.

3. Procédé selon la revendication 1 ou 2, dans lequel la réponse impulsionnelle de puissance estimée est dérivée de porteuses pilotes dans le signal reçu.

4. Procédé selon la revendication 1, 2 ou 3, comprenant en outre l'étape de multiplication de la réponse impulsionnelle de canal de puissance estimée par une fonction représentant la puissance non désirée dans le signal.

5. Procédé selon la revendication 4, comprenant en outre l'étape de division de la réponse impulsionnelle de canal de puissance estimée par une fonction représentant la puissance désirée dans le signal.

6. Procédé selon la revendication 5, dans lequel l'étape de localisation comprend prendre en compte l'historique du résultat des étapes de localisation précédentes.

7. Procédé selon l'une quelconque des revendications 1 à 6, dans lequel le signal reçu est un signal de multiplexage par répartition en fréquences orthogonales, OFDM.

**8.** Procédé selon la revendication 7, dans lequel le signal reçu est un signal Digital Radio Mondiale, DRM.

**9.** Appareil de réception d'un signal multiporteuses, le signal multiporteuses étant d'un type comprenant une succession de périodes symboles durant chacune desquelles un bit ou une pluralité de bits est transmis sur chacune d'une pluralité de porteuses, chaque période symbole comprenant une période symbole active et un intervalle de garde, l'appareil comprenant :

une entrée (12) pour recevoir un signal multiporteuses dudit type;

un moyen de transformation (18) pour soumettre le signal reçu à une transformation du domaine temps en domaine de fréquence;

un détecteur (30) pour la détection de la synchronisation temporelle appliquée au signal reçu après la transformation; et

un contrôleur (32) pour contrôler la base de temps des signaux soumis à la transformation en fonction de la détection de synchronisation temporelle;

où le détecteur (30) pour la détection de la synchronisation temporelle comprend un générateur (72, 74) pour générer une réponse impulsionnelle de puissance estimé, PIR, et un combinateur (76) pour combiner la réponse impulsionnelle de puissance estimée avec une fonction de pondération;

**caractérisé en ce que** chaque portion latérale de la fonction de pondération est sensiblement de forme quadratique, le combinateur (76) pour combiner la réponse impulsionnelle de canal de puissance estimée avec une fonction de pondération, multiplie la réponse impulsionnelle de puissance estimée et la fonction de pondération à chaque position de fenêtre possible pour générer un signal qui est une mesure du dommage fait à la réponse du signal en fonction de la position de fenêtre et le détecteur (30) pour la détection de synchronisation temporelle comprend en outre un moyen pour détecter quand le signal est en dessous d'un seuil prédéterminé.

**10.** Appareil selon la revendication 9, dans lequel le moyen de localisation comprend :

un moyen pour détecter les premier et dernier points auxquels le signal est en dessous du seuil; et

un moyen pour déterminer la moyenne desdits premier et dernier points comme le centre d'une position de fenêtre.

FIG. 1

EP 1 755 300 B1

FIG. 2

EP 1 755 300 B1

FIG. 3

FIG. 4

FIG. 5

FIG. 6

FIG. 7

**EP 1 755 300 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 02250062 A
- EP 1221793 A
- US 5848107 A
- EP 1387544 B1

### Non-patent literature cited in the description

- **Jonathan Stott.** DRM-Key technical features. *EBU Technical Review,* March 2001